# EUROPÄISCHE PATENTSCHRIFT

(11) **EP 1 623 390 B1**
(45) Veröffentlichungstag und Bekanntmachung des Hinweises auf die Patenterteilung: **01.06.2016**
(21) Anmeldenummer: 04725334.9
(22) Anmeldetag: 02.04.2004
(51) Int. Cl.: G07C 5/12

(54) **DRUCKER MIT HERAUS BEWEGBARER UND VERRIEGELBARER MEDIENEINHEIT**
PRINTER WITH A MEDIA UNIT WHICH CAN BE REMOVED THEREFROM AND WHICH IS LOCKABLE
IMPRIMANTE POURVUE D'UNE UNITE A SUPPORTS DEPLACABLE ET VERROUILLABLE

(30) Priorität: 12.05.2003 DE 10321233
(43) Veröffentlichungstag der Anmeldung: 08.02.2006
(73) Patentinhaber: Continental Automotive GmbH, 30165 Hannover (DE)
(72) Erfinder: RIESTER, Thomas, 78052 Villingen-Schwenningen (DE); HAUTVAST, Heinz-Josef, 78086 Brigachtal (DE); HÜGLE, Axel, 78120 Furtwangen (DE)
(86) Internationale Anmeldenummer: PCT/EP2004/003541
(87) Internationale Veröffentlichungsnummer: WO 2004/100077

(56) Entgegenhaltungen:
- DE-A- 19 807 307
- DE-A1- 10 215 122
- DE-C- 692 376
- GB-A- 2 321 706
- US-A- 3 434 152
- US-A- 4 617 893
- US-A- 5 043 562
- US-B1- 6 392 677

## Beschreibung

Die Erfindung betrifft einen Drucker gemäß Anspruch 1 und einen Fahrtenschreiber mit einem derartigen Drucker gemäß Anspruch 23.

Der Schwerpunkt der Anwendung der erfindungsgemäßen Vorrichtung liegt im Bereich von Fahrtenschreibern, bzw. Vorrichtungen zur Erfassung der Arbeitszeiten und Ruhezeiten von Nutzfahrzeugfahrern. Andere Anwendungen sind jedoch ebenfalls denkbar, z. B. im Bereich des Bank- und Zahlungswesens. Aufgrund der rechtlichen Nachweisfunktion der mittels des Fahrtenschreibers erfassten Arbeitszeitdaten, müssen diese Daten in einem fälschungssicheren Format unveränderlich dokumentiert werden. Der gesetzliche Standard sieht vor, dass die Daten mittels eines Druckers auf spezielles, fälschungssicheres Papier aufgedruckt werden, um gerichtlichen Beweischarakter zu entfalten. An die Qualität und die Funktionssicherheit des Druckers eines Fahrtenschreibers sind daher strenge Maßstäbe zu legen. Diesen hohen Anforderungen nachzukommen, stellt die Entwicklung angesichts der zum Teil extremen Betriebsbedingungen dieser Vorrichtungen vor eine große Herausforderung. Das raue Betriebsklima zeichnet sich durch extreme Temperaturschwankungen zwischen -40°C und 80°C bei gleichzeitig hoher Luftfeuchtigkeit sowie hohen Schwingungs- und Schockbeanspruchungen aus. Daneben werden gattungsgemäße Vorrichtungen in unterschiedlichen Einbaulagen montiert, so dass hinsichtlich der dynamischen mechanischen Beanspruchungen die Belastungen in nahezu sämtlichen Raumrichtungen ertragen können werden müssen, ohne dass die Verfügbarkeit der Vorrichtung beeinträchtigt wird. Das raue Betriebsklima verschärft sich zusätzlich durch eine regelmäßig wenig achtsame Bedienung der Vorrichtung. Gleichzeitig müssen die gewöhnlichen Standards hinsichtlich des Bedienungskomforts beachtet werden, beispielsweise darf der Medienwechsel unter den eher widrigen Bedingungen in dem Führerhaus eines Kraftfahrzeuges nicht in eine filigrane Handarbeit ausarten. Zusätzlich erschwert der nur geringe zur Verfügung stehende Bauraum die Verwirklichung einer sicheren Funktion und komfortablen Bedienbarkeit bei gleichzeitiger Robustheit.

Aus der DP 102 15 122.9 ist bereits ein Fahrtschreiber mit einem quaderförmigen Gehäuse und einer gattungsgemäßen Druckvorrichtung bekannt, bei welcher die Medieneinheit zum Zwecke des Nachladens aus dem Gehäuse heraus bewegbar ist und mittels Riegelelementen, welche mit Rastgliedern zusammenwirken, in dem Gehäuse fixierbar bzw. verriegelbar ist. Es wird vorgeschlagen, das Riegelelement drehbar zu lagern und mit einem Rasthaken zu versehen, welches einem ortsfesten Rastglied zugeordnet ist. Unter den bereits geschilderten dynamischen mechanischen Beanspruchungen hat sich jedoch gezeigt, dass ein solcher Rasthaken sich außerplanmäßig selbsttätig entriegelt, so dass sich die schubladenartig ausgebildete Medieneinheit ungewollt aus dem Gehäuse des Fahrtenschreibers herausbewegt. Die Umsetzung in der Praxis erfolgt bei dieser Lösung mit zwei jeweils auf einer Seite der Medieneinheit angeordneter Rasthaken, was zur Folge hatte, dass sich bisweilen nur ein Rasthaken im Eingriff mit dem entsprechenden Rastglied befindet, so dass sich zwar die Medieneinheit aus der Betriebsposition entfernt sich jedoch verlagert, so dass sich das Druckbild ungebührlich verschlechtert. Daneben ist die Druckqualität hohen Schwankungen unterworfen.

Ausgehend von den Nachteilen und Problemen des Standes der Technik hat es sich die Erfindung zur Aufgabe gemacht, einen Drucker der eingangs genannten Art zu schaffen, welcher trotz der rauen Betriebsbedingungen bei hohem Bedienungskomfort eine niedrige Ausfallrate aufweist und ein gutes Druckbild erzeugt.

Die erfindungsgemäße Lösung der Aufgabe sieht ein Verriegelungselement laut Anspruch 1 vor.

Es hat sich gezeigt, dass ein translatorisch bewegbares Verriegelungselement eine höhere Schocksicherheit bietet als ein drehbar gelagertes. Erfindungsgemäß ist es mittels der Verriegelungseinheit möglich, die schubladenartig verschiebbare Medieneinheit nicht nur in der Verriegelt-Stellung in dem Gehäuse zu halten, sondern auch zu stabilisierten. Im Sinne dieser Doppelfunktion richtet die Verriegelungseinheit die Medieneinheit in der Betriebsposition genauer aus. Demgegenüber hat ein drehbar gelagerter Rasthaken außerdem den Nachteil, dass entweder besonders große Überhübe bei Verriegelungs- und Entriegelungsvorgängen vorzusehen sind oder außerordentlich hohe Vorspannungskräfte am Rasthaken in Richtung einer Verriegelt-Stellung angelegt werden müssen, um die erforderliche Schocksicherheit zu gewährleisten. Diese Verspannungskräfte nehmen zu, wenn die Druckeinheit und/oder die Medieneinheit mittels eines zweiten elastischen Elements gegen die Einschubrichtung vorgespannt sind und die Verriegelungseinheit diese Kräfte aufnehmen muss. Erst die erfindungsgemäße translatorische Bewegung quer zur Einschubrichtung des Verriegelungselements gewährleistet die erforderliche Schocksicherheit.

Eine vorteilhafte Weiterbildung der Erfindung sieht vor, dass der Drucker zwei voneinander in Abstand zueinander angeordnete Halteelemente aufweist, die in der Verriegelt-Stellung mit mindestens einem Verriegelungselement in Eingriff stehen. Die Verwendung zweier beabstandeter Halteelemente zeichnet sich durch eine unvergleichlich präzise Halterung der Medieneinheit in dem Gehäuse des Druckers aus. Auf diese Weise können auch Drehmomente auf die Verriegelungseinheit übertragen werden und die erfindungsgemäße Stabilisierung der Medieneinheit wird möglich.

Zweckmäßig erstreckt sich die Abstandsrichtung der beiden Halteelemente senkrecht zur Beweglichkeitsrichtung des Verriegelungselements bzw. der Verriegelungselemente. Auf diese Weise vermögen es in Einschubrichtung auftretende Kräfte an der Verriegelungseinheit nicht, dass Verriegelungselement, beispielsweise aus der Verriegelt-Stellung heraus, zu bewegen. Besonders zweckmäßig ist eine Orientierung der Abstandsrichtung der Halteelemente, bzw. der Krafteinleitungsbereiche der Kräfte aus den Verriegelungselementen in die fest in dem Gehäuse angeordneten Halteelemente, senkrecht zur Einschubrichtung und bei zwei sich in Einschubrichtung erstreckenden Führungen der Medieneinheit eine senkrechte Ausrichtung zu der von diesen beiden Führungen beschriebenen Ebene. Mittels einer derartigen Anordnung der Verriegelungseinheit gewinnt die Medieneinheit eine zusätzliche Lagestabilität in dem Gehäuse, da quer zur Einschubrichtung in der Ebene der Führungen der Medieneinheit in dem Gehäuse auftretende Drehmomente vorteilhaft von der Verriegelungseinheit aufgenommen und auf das Gehäuse übertragen werden können.

Der entscheidende Vorteil der translatorischen Bewegungsrichtung quer zur Einschubrichtung des Verriegelungselements der Verriegelungseinheit liegt in der weitestgehenden Entkopplung der Bewegung des Verriegelungselements von in Einschubrichtung wirkenden Kräften. Hier sind neben den während des bestimmungsgemäßen Betriebes auftretenden Schockbelastungen vor allem die Kräfte aus einer die Medieneinheit entgegen der Einschubrichtung drückenden Auswurffeder oder eines sonstigen elastischen Elements, von Bedeutung. Neben der erforderlichen Kraft für den Auswurf sorgt ein solches zweites elastisches Element auch für eine gesicherte Lage der Medieneinheit in dem Gehäuse, trotz des für die Beweglichkeit erforderlichen Spiels der Medieneinheit. Insbesondere bei einem auf einer Frontblende der Medieneinheit zweckmäßig und Platz sparend angebrachten, die Verriegelungseinheit betätigenden Bedienelement, ist eine starke Auswurfkraft entgegen der Einschubrichtung erforderlich, da der Betrag dieser Kraft den Fingerdruck des Benutzers beim Betätigen des den Auswurf initiierenden Bedienelements übersteigen muss.

Mit Vorteil weist die Verriegelungseinheit ein erstes elastisches Element auf, welches das Verriegelungselement in die Verriegelt-Stellung vorspannt. Diese, für eine Schockresistenz erforderliche Anordnung, kann erfindungsgemäß in der Schocksicherheit noch weiter gesteigert werden, da aufgrund der kräftemäßigen Entkopplung der Bewegung der Verriegelungseinheit von in Einschubrichtung auftretenden Kräften, die Rückstellkraft die des ersten elastischen Elements auch bei Platz sparend auf der Frontblende der Medieneinheit angeordneter, den Auswurf der Medieneinheit initiierender Bedienelemente, die Bedienkraft mittels einer besonders starken Auswurffeder kompensiert werden kann. Daneben sind die Rückstellkraft aus der Auswurffeder und die Kraft aus dem ersten elastischen Element der Verriegelungseinheit linear unabhängig, was der Dimensionierung neue Freiheitsgrade eröffnet.

Zusätzliche Robustheit wird der erfindungsgemäßen Verriegelungseinheit verliehen, wenn die Verriegelungseinheit einen gleitgelagerten Schlitten aufweist, welcher mindestens ein Verriegelungselement trägt und der in eine Verriegelt-Stellung und in eine Entriegelt-Stellung bewegbar ist. Sinnvoll erstreckt sich das Verriegelungselement im Wesentlichen senkrecht zu der Bewegungsrichtung des Schlittens.

Für ein Höchstmaß an Stabilität ist der Schlitten in Bewegungsrichtung länglich ausgebildet, so dass auch Drehmomente auf die Gleitfläche übertragen werden können. Insbesondere bei länglicher Ausbildung ist der erfindungsgemäße Schlitten als Träger mindestens eines länglich ausgebildeten Verriegelungselementes geeignet, welches sich mit seiner Längsachse senkrecht zu der Bewegungsrichtung des Schlittens erstreckt. Bei länglicher Ausbildung des Schlittens können senkrecht zur Längsachse des Verriegelungselements und senkrecht zur Bewegungsrichtung des Schlittens orientierte Drehmomente aus der Medieneinheit mittels der Verriegelungseinheit in das Gehäuse übertragen werden.

Die Übertragung in Einschubrichtung orientierter Drehmomente aus der Medieneinheit in das Gehäuse mittels der Verriegelungseinheit verleiht der Anordnung vor allem dann die optimale Stabilität, wenn zwei voneinander in Abstand zueinander angeordnete Halteelemente vorgesehen sind und entsprechend diesen zugeordnete Verriegelungselemente an dem Schlitten angebracht sind, wobei die Abstandsrichtung der Halteelemente zweckmäßig senkrecht zu der Bewegungsrichtung des Schlittens und senkrecht zu der Einschubrichtung orientiert ist.

Die Übertragung höherer Stützmomente aus der Medieneinheit auf die Verriegelungseinheit in Einschubrichtung und quer dazu ist möglich, wenn die an dem Schlitten befestigten Verriegelungselemente mindestens zwei Anlagebereiche aufweisen, mit denen sie an den Haltelementen in der Verriegelt-Stellung anliegen und die Abstandsrichtung der beiden Anlagebereiche eine im Wesentlichen senkrecht zu der Bewegungsrichtung des Schlittens verlaufende Gerade beschreibt.

Weitere Stabilität wird in der Lage der Medieneinheit erzielt, wenn der Schlitten der Verriegelungseinheit auf mindestens einer Gleitebene gleitgelagert ist, und sich die Gleitebene zwischen den beiden Anlagebereichen erstreckt, so dass auf beiden Seiten der Gleitlagerung des Schlittens mindestens ein Verriegelungselement angeordnet ist.

Zur Übertragbarkeit beliebig orientierter Kraftkomponenten von der Medieneinheit auf das Gehäuse ist es vorteilhaft, wenn sich die beiden Anlagebereiche im Wesentlichen auf einer einzigen von einer Normalen der Gleitebene des Schlittens beschriebenen Geraden befinden.

Ein optimales Zusammenwirken der Verriegelungseinheit mit Führungen der schubladenartig verschiebbaren Medieneinheit ergibt sich, wenn die Medieneinheit verschiebbar entlang der Einschubkurve in Führungen gelagert ist, die Abstandsrichtung der beiden Anlagebereiche der Verriegelungseinheit sich im Wesentlichen in Richtung der Normalen der von den Führungen beschriebenen dortigen Tangentialebene erstreckt.

Um ein reibungsloses Einrasten des Verriegelungselements in das zugeordnete Halteelement zu gewährleisten, ist es zweckmäßig, wenn das Verriegelungselement eine zylindrische Form aufweist, länglich ausgebildet ist und die Zylinderlängsachse senkrecht zu der Bewegungsrichtung verläuft. Bei zweckmäßig hakenförmig ausgebildeten Haltelementen gleitet ein derartig ausgebildetes Verriegelungselement entlang des Hakenprofils in die Verriegelt-Stellung nahezu reibungslos ein.

Aus Gründen der Raumersparnis ist es sinnvoll, wenn die beweglichen Verriegelungselemente an der Medieneinheit befestigte Bestandteile der Medieneinheit sind. Unter den knappen Bauraumverhältnissen hat es sich als sinnvoll erwiesen, das die Verriegelungseinheit betätigende Bedienelement an der Frontblende der Medieneinheit vorzusehen, was eine Anordnung der beweglichen Verriegelungselemente an der Medieneinheit bedingt. In gleicher Weise ist es zweckmäßig, wenn die stationären Halteelemente mit dem Gehäuse fest verbunden sind und mit den Verriegelungselementen an der Medieneinheit verriegelnd zusammenwirken.

Zur Vermeidung von Fehldrucken ist es zweckmäßig, wenn die beweglichen Teile der Verriegelungseinheit mit einem Sensor zusammenwirken, welcher eine Verriegelt-Stellung, in welcher die Medieneinheit oder der Träger und die Druckeinheit in Abstandsrichtung zueinander fixiert sind, oder entsprechend eine Entriegelt-Stellung erfasst.

Aufgrund der erfindungsgemäßen Anordnung von Verriegelungselementen auf einem gemeinsamen Schlitten, ist vorteilhaft ein Sensor zur Erfassung des Zustands der Verriegelungseinheit ausreichend. Dies hat gegenüber der Verwendung mehrerer Sensoren für mehrere Verriegelungselemente zum einen den Vorteil, dass Bauteilkosten eingespart werden und zum anderen den funktionellen Vorteil, dass es nicht zu sich widersprechenden Statusmeldungen der Verriegelungseinheit kommen kann.

Besondere Bedeutung gewinnt die erfindungsgemäße Verriegelung im Zusammenwirken mit einer Druckeinheit, die in dem Gehäuse innerhalb eines Bewegungsspiels bewegbar ist. Eine derartige Ausbildung vermag die Druckqualität zu erhöhen, wenn Mittel zur Ausrichtung der Druckeinheit zu der Medieneinheit vorgesehen sind, so dass die Druckeinheit und die Medieneinheit zueinander ausgerichtet werden, wenn die Medieneinheit in Einschubrichtung eingeschoben wird. Die sich aus dem Bewegungsspiel der Medieneinheit ergebende Lageungenauigkeit zu der Druckeinheit wird auf diese Weise beim Einschieben in das Gehäuse ausgeglichen. Das Bewegungsspiel der Druckeinheit in dem Gehäuse erstreckt sich vor allem horizontal in Einschubrichtung, vorzugsweise in einer Größenordung von etwa 1 mm. Zusätzlich kann ein horizontales Bewegungsspiel quer zur Einschubrichtung in gleicher Größenordnung vorgesehen sein. Ein vertikales Bewegungsspiel quer zur Einschubrichtung ist aufgrund der besonderen Bedeutung für die Druckqualität mit etwa 0,5 mm zweckmäßig. Im Zusammenwirken mit einem zweiten elastischen Element, welches die Druckeinheit mit einer Kraft entgegen der Einschubrichtung schiebt oder zieht, so dass die Kraft die Druckeinheit der Medieneinheit entgegendrückt, wenn diese eingeschoben wird, so dass sich die Druckeinheit an der eingeschobenen Medieneinheit ausrichtet, sorgt das bevorzugt räumliche Bewegungsspiel zuverlässig für eine reproduzierbare Relativlage der Medieneinheit zu der Druckeinheit. Bei einer Ausbildung der Verriegelungseinheit mit mindestens zwei Halteelementen wird eine besondere Schocksicherheit und Lagestabilität der Medieneinheit gewährleistet, wenn die Halteelemente symmetrisch zu dem zweiten elastischen Element angeordnet sind. Eine Ausbildung des zweiten elastischen Elements in der Weise, dass es die Druckeinheit in dem Gehäuse bei nicht in Betriebsposition befindlicher Medieneinheit gegen das Bewegungsspiel begrenzende Anschläge vorspannt, verhindert zuverlässig unkontrollierte, möglicherweise zerstörerische Bewegungen der Druckeinheit in dem Gehäuse bei Abwesenheit der Medieneinheit.

Im Folgenden ist ein spezielles Ausführungsbeispiel zur Verdeutlichung der Erfindung unter Bezugnahme auf Zeichnungen näher beschrieben. Es zeigen:
- Fig. 1: einen erfindungsgemäßen Drucker als Bestandteil eines in einem Gehäuse angeordneten Fahrtenschreibers in perspektivischer Darstellung aus Sicht von schräg oben,
- Fig. 2: das geöffnete Gehäuse des in Fig. 1 dargestellten Fahrtenschreibers mit der Anordnung des Trägers der Medieneinheit, seitlichen Führung der Medieneinheit und der Verriegelungseinheit aus Sicht von schräg unten,
- Fig. 3: eine perspektivische Darstellung einer Lagerung der Druckeinheit aus Sicht von schräg oben,
- Fig. 4: eine perspektivische Darstellung der Medieneinheit mit der Aufnahme für einen Bandwickel, eines Teils der Verriegelungseinheit und des elastischen Elements zum Auswurf der Medieneinheit aus dem Gehäuse aus Sicht von schräg oben,
- Fig. 5: eine isolierte perspektivische Darstellung des Bedienelements der Verriegelungseinheit, eines Übertragungsschiebers der Verriegelungseinheit, des Schlittens der Verriegelungseinheit, eines Verriegelungselements und eines ersten elastischen Elements aus Sicht von schräg oben,
- Fig. 6: eine perspektivische Darstellung des Schlittens der Verriegelungseinheit und eines Verriegelungselements,
- Fig. 7: eine perspektivische Darstellung des Schlittens der Verriegelungseinheit mit einem Verriegelungselement gemäß Fig. 6 in Zusammenstellung mit einer Leiterplatte, auf welcher ein Sensor angeordnet ist,
- Fig. 8: eine perspektivische Darstellung eines am Gehäuse befestigten Teiles der Verriegelungseinheit,
- Fig. 9: eine perspektivische Darstellung der Verriegelungseinheit gemeinsam mit der Frontblende der Medieneinheit,
- Fig. 10: eine perspektivische Darstellung der gehäuseseitigen und Medieneinheit-seitigen Verriegelungseinheit in Zusammenstellung mit dem Träger der Medieneinheit und der Frontblende aus Sicht von schräg unten.

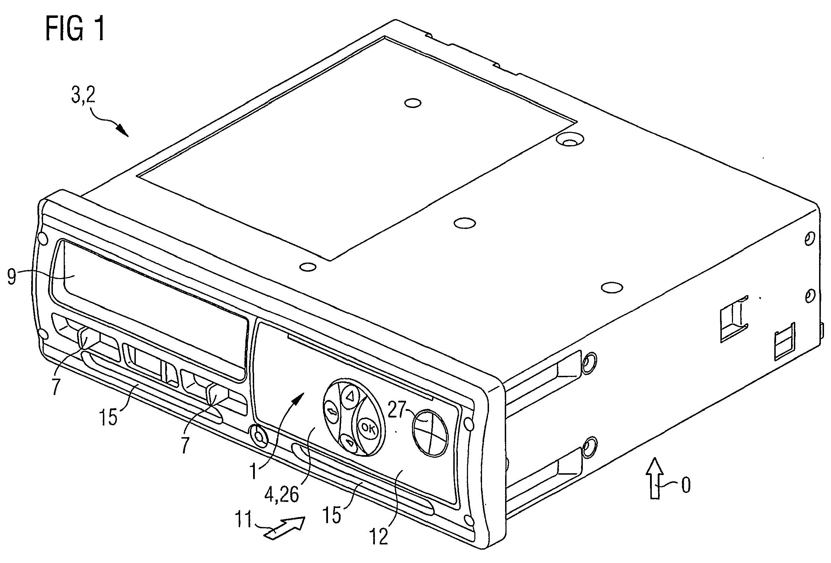

Zu einigen Darstellungen ist die Einbaulage mittels eines Pfeils O, der nach oben weist, ausgewiesen. Das in Figur 1 dargestellte, im Wesentlichen quaderförmige Gehäuse 2 dient der Aufnahme eines Fahrtenschreibers 3 umfassend einen Drucker 1. Der Fahrtenschreiber ist mit verschiedenen Bedienelementen 7 und einer LCD-Anzeigeeinheit 9 versehen. Neben der LCD-Anzeigeeinheit 9 befindet sich die Frontblende 12 des Druckers 1. Unter der Frontblende 12 und der LCD-Anzeigeeinheit 9 befinden sich jeweils Aufnahmeöffnungen 15 zur Aufnahme einer nicht dargestellten, einen Datenspeicher umfassenden Karte. Die Frontblende 12 des Druckers 1 ist Bestandteil einer Medieneinheit 26 des Druckers 1 und trägt ein erstes Bedienelement 27 zur Betätigung einer Verriegelungseinheit 17 und zweite Bedienelement 25 zur Steuerung der Funktion des Druckers 1.

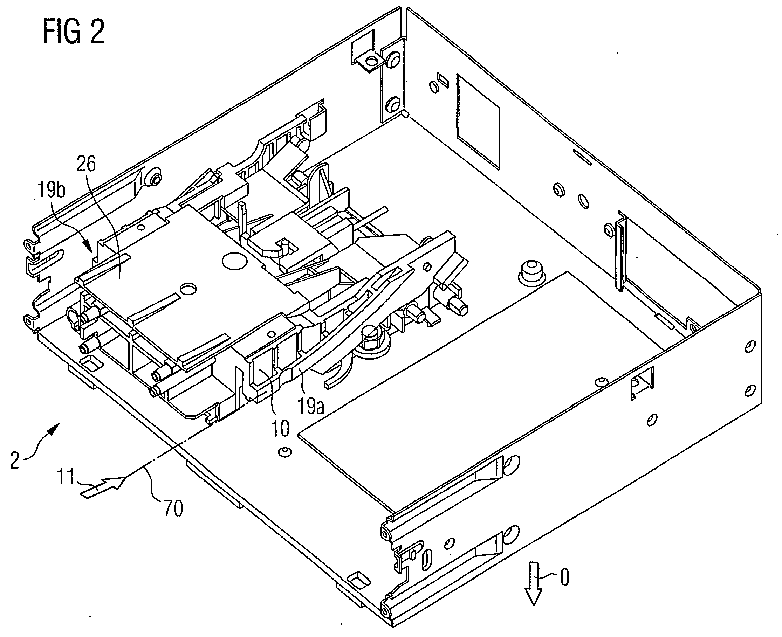

In Figur 2 ist das.Gehäuse 2 der Figur 1 perspektivisch aus der Sicht von unten geöffnet dargestellt, wobei im Inneren des Gehäuses 2 lediglich ein Träger 10 der Medieneinheit 26, mit seitlich angeordneten ersten Führungselementen 19a, 19b und eine Verriegelungseinheit 11 dargestellt sind. Zum besseren Verständnis wurden die Elektronik des Fahrtenschreibers 3, die Aufnahmeöffnungen 15 für eine Chipkarte, zweite Führungselemente 20 zur Führung der ersten Führungselemente 19a, 19b, eine Transporteinheit 8 der Medieneinheit 26 als wesentliche Bauteile nicht dargestellt. Die Medieneinheit 26 ist entlang der durch die ersten Führungselemente 19a, 19b beschriebenen Einschubkurve 70 entlang einer Einschubrichtung 11 und entgegen dieser Richtung aus dem Gehäuse 2 heraus und in eine Betriebsposition bewegbar. Beim Erreichen der Betriebsposition kommt es zu einem Einrasten der Verriegelungseinheit 17, welche die Medieneinheit 26 in der Betriebsposition in dem Gehäuse 2 hält.

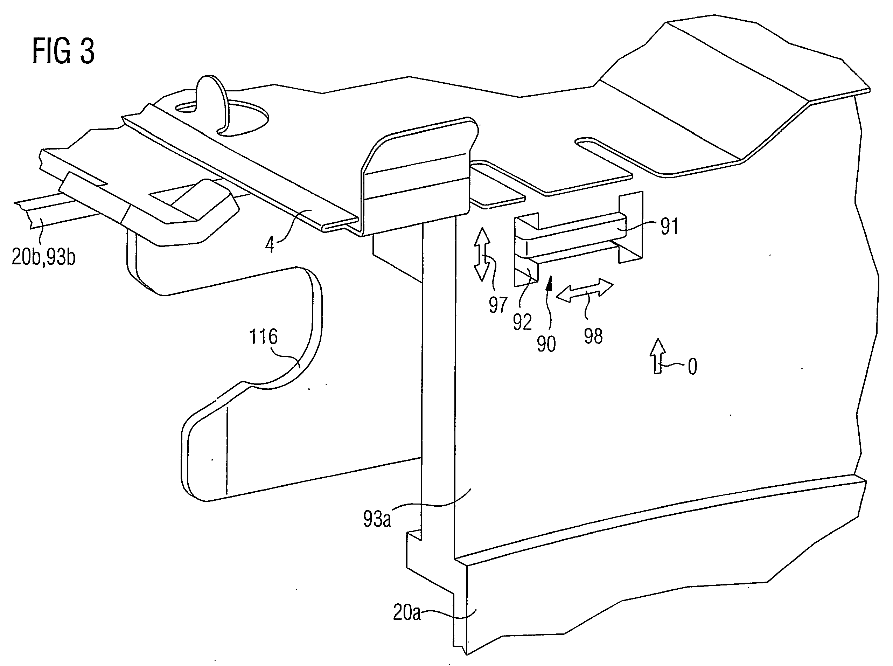

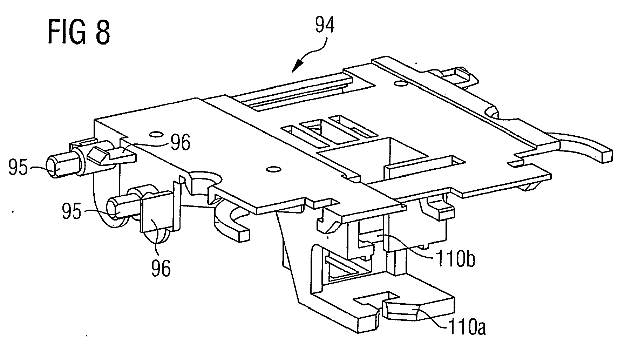

In Figur 3 ist die schwimmende Lagerung 90 der in den übrigen Figuren nicht dargestellten Druckeinheit 4 dargestellt. Die schwimmende Lagerung 90 besteht aus einer beidseitig der Druckeinheit 4 angeformten flügelartigen Ausformung 91, welche jeweils in einer Ausnehmung 92 angeordnet ist, die Bestandteil eines Trägerelements 93a ist, das auch die mit den ersten Führungselementen 19a, 19b korrespondierenden zweiten Führungselemente 20a, 20b umfasst. Die Trägerelemente 93a, 93b sind im montierten Zustand fest mit einem in Figur 8 dargestellten Halteelementträger 94 der Verriegelungseinheit 17 verbunden. Hierbei sind die Trägerelemente 93a, 93b beidseitig seitlich des Haltelementsträgers 94 an Zapfen 95 zentriert und mittels Rasthaken 96 verrastet. Die beidseitig der Druckeinheit 4 angeordneten Ausformungen 91 haben in den Ausnehmungen 92 der Trägerelement 93a, 93b jeweils ein vertikales Bewegungsspiel 97 von etwa 0,5 mm und ein horizontales Bewegungsspiel 98 in Einschubrichtung 11 von etwa 1 mm. Zwischen der Druckeinheit 4 und den Trägerelementen 93a, 93b ist in der Summe außerdem ein horizontales Bewegungsspiel quer zur Einschubrichtung von 1 mm vorgesehen. Zum Vorteil der Druckqualität ließe sich das horizontale Bewegungsspiel in Einschubrichtung 11 und quer dazu jeweils auf etwa 0,5 mm reduzieren, was jedoch den Fertigungsaufwand gegenüber dem gewählten Bewegungsspiel erhöhen würde. In gleicher Weise ist es mit funktionellem Vorteil denkbar, das vertikale Bewegungsspiel auf bis zu 0,35 mm zu reduzieren. In nicht dargestellter Weise ist die Druckeinheit 4 mittels eines nicht dargestellten dritten elastischen Elements entgegen der Einschubrichtung 11 in der Ausnehmung 92 mit der Ausformung 91 der schwimmenden Lagerung 90 anstoßend vorgespannt, so dass sich Druckeinheit 4 stets auch bei Abwesenheit der Medieneinheit 26 in einer definierten Lage befindet.

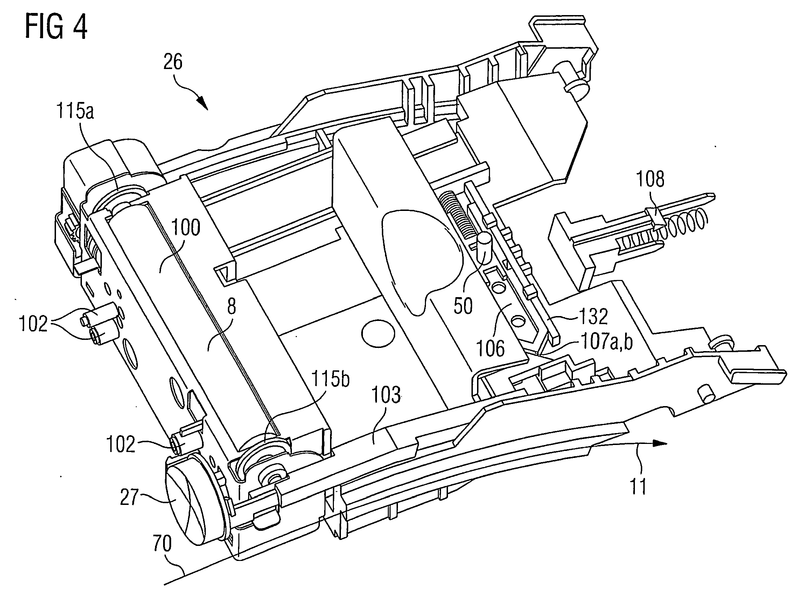

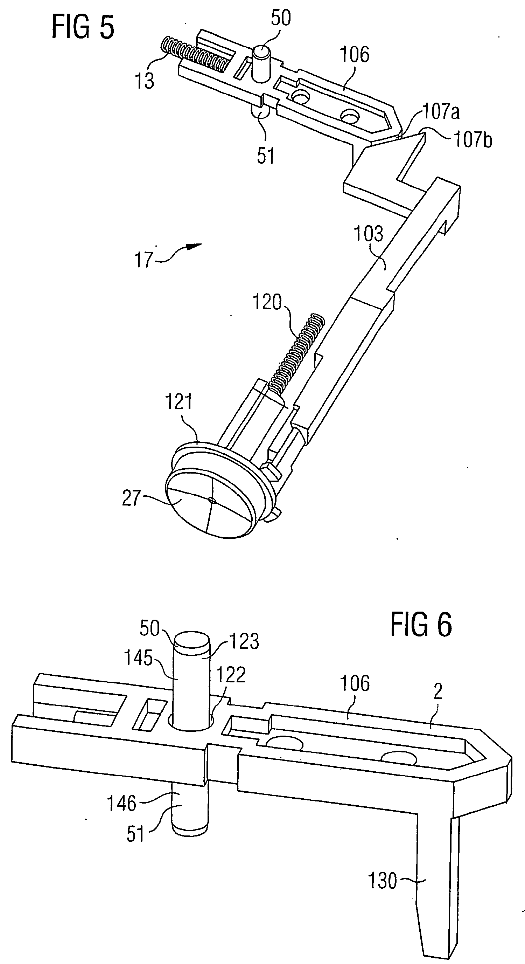

In Figur 4 ist die Medieneinheit 26 mit ihren wesentlichen Bauteilen, einer Transporteinheit 8, den beweglichen Teilen der Verriegelungseinheit 17, dem Träger 10 und einem zweiten elastischen Element 99 zum Auswurf der Medieneinheit 26 dargestellt. Eine Transporteinheit 8 der Medieneinheit 26 weist eine Transportwalze 100 für den Transport des Papiers eines nicht dargestellten, in dem Aufnahmeraum 101 zwischen Transporteinheit 8 und Verriegelungseinheit 17 angeordneten Bandwickels. An der Frontseite 104 der Transporteinheit 8 der Medieneinheit 26 sind Zentrierelemente 102 zur Aufnahme der in Figur 1 dargestellten Frontblende 12 angeordnet. Mittels des ersten Bedienelements 27 kann ein Betätigungsschieber 103 der Verriegelungseinheit 17 betätigt werden, welcher in der in Figur 5 dargestellten Weise einen Schlitten 106 der Verriegelungseinheit 17 an dem Betätigungsschieber 103 und an dem Schlitten 106 mittels schräger Gleitebenen 107a, 107b transportiert. Die Medieneinheit 26 ist in dem Gehäuse 2 mittels eines als Spiralfeder ausgebildeten zweiten elastischen Elements 99, welches sich an dem Haltelementträger 94 zwischen einem in Figur 8 dargestellten ersten Halteelement 110a und zweiten Halteelement 110b abstützt, entgegen der Einschubrichtung 11 vorgespannt. Die Transporteinheit 8 weist beidseitig der Transportwalze 100 auf einer die Transportwalze 100 aufnehmenden gemeinsamen Welle 114 Ausrichtführungen 115 auf, welche mit entsprechenden Aussparungen 116 der in Figur 3 ausschnittsweise dargestellten Druckeinheit 4 bei einer Bewegung der Medieneinheit 26 in Einschubrichtung 11 die Druckeinheit 4 zu der Medieneinheit 26 ausrichtend zusammenwirken. Im Verlauf dieser Ausrichtung bewegt sich die Druckeinheit 4 innerhalb der horizontalen (98) und vertikalen (98) Bewegungsspiele. Auf diese Weise erfolgt zweckmäßig ein Toleranzausgleich zwischen der Medieneinheit 26 und der Druckeinheit 4, was.die Druckqualität entscheidend verbessert. Der Schlitten 106 ist dabei an dem Träger 10 der Medieneinheit 26 entlang einer Gleitführung 117 gleitgelagert verschiebbar geführt. Die Gleitführung 117 begrenzt die Beweglichkeit des Schlittens 106 auf lediglich den translatorischen Freiheitsgrad der Verriegelungs-Bewegung. Auf diese Weise ist die Gleitführung 117 des Schlittens 106 auch in der Lage, Drehmomente aufzunehmen, welche mittels an dem Schlitten 106 befestigter Verriegelungselemente 50, 51 eingetragen werden.

Aus der Darstellung der Figur 5 ist eine elastisch vorgespannte Lagerung des ersten Bedienelements 25 mittels eines vierten elastischen Elements 120 entnehmbar. Das vierte elastische Element 120 wirkt im fertig montierten Zustand mit einem Kragen 121 an dem ersten Bedienelement 27 und einem sich in Umfangrichtung des ersten Bedienelements 27 erstreckenden, nicht näher dargestellten Dichtungsanschlag der Frontblende 12 dichtend zusammen. Das vierte elastische Element 120 wird hierbei derart dimensioniert und auch vorgespannt, dass die ohne zusätzliche elastische Dichtung auskommende Anordnung aus Kragen 121 und Dichtungsanschlag der Frontblende 12 der Schutzklasse IP 54 genügt, insbesondere spritzwasserdicht ist.

Ein erstes elastisches Element 13 der Verriegelungseinheit 17 sorgt für eine definierte Lage der Verriegelungselemente 50, 51 und des Schlittens 106 sowohl in einer Verriegelt-Stellung als auch einer Entriegelt-Stellung.

Der Figur 6 ist die Ausbildung des Schlittens 106 mit Verriegelungselementen 50, 51 und einem Sensor-Betätigungselement 130 in perspektivischer Darstellung entnehmbar. Der Schlitten 106 ist mit einer zylindrischen Bohrung 122 versehen, durch welche sich ein ebenfalls zylindrisch ausgebildeter metallischer Stift 123 erstreckt, der beidseitig einer Gleitfläche 131 der Gleitführung 117 des Schlittens 106 hervorsteht. Die beiden hervorstehenden Enden des Stifts 123 verkörpern die Verriegelungselemente 50, 51.

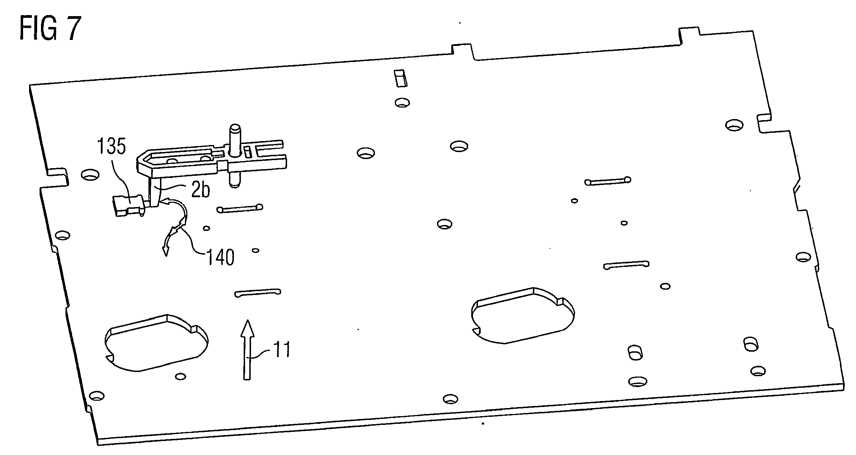

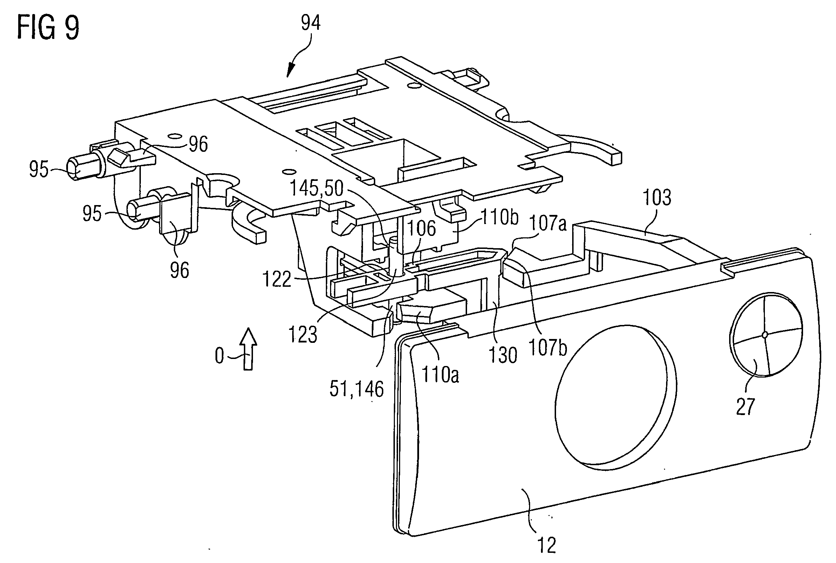

In der in Figur 7 dargestellten Weise betätigt das Sensorbetätigungselement 130 einen Sensorschalter 135, welcher auf einer gemeinsamen Leiterplatte 136 der Vorrichtung angeordnet ist. Im Rahmen einer Einwärtsbewegung entlang der Einschubrichtung 11 des Schlittens 106 vollzieht der Schlitten 106 und mit ihm das Sensorbetätigungsfeld 130 eine bogenförmige (140) Bewegung zur Betätigung des Sensorschalters 135 entlang der kulissenartigen Führungen der Hakenprofile der in Figur 8 dargestellten Halteelemente 110a, 110b, welche dem Schlitten 106 diese bogenförmige Bewegung (140) mittels der Führungselemente 50, 51 aufzwingen. Die eigentliche Verriegelungsbewegung des Schlittens 106, bzw. der Verriegelungselemente 50, 51 entlang der hakenförmigen Profile der Halteelemente 110a, 110b verläuft senkrecht zur Einschubrichtung 11, so dass die Rückstellkraft des zweiten elastischen Elements 99 zum Auswurf der Medieneinheit keine Komponente in Bewegungsrichtung der Verriegelungseinheit 17 aufweist. Die beidseitig der Gleitfläche 131 des Schlittens 106 angeordneten Verriegelungselemente 50, 51 und damit ebenfalls beidseitig dieser Gleitfläche 131 angeordneten Anlagebereiche 145, 146 der Verriegelungselemente 50, 51 an den Halteelementen 110a, 110b ermöglichen vorteilhaft eine Übertragung von quer zur Einschubrichtung 11 orientierten Drehmomenten aus dem drehmomentstabil gelagerten Schlitten 106 auf die Halteelemente 110a, 110b der Verriegelungseinheit 17. Das in Figur 4 dargestellte zweite elastische Element 99 ist zwischen den in Figur 8 dargestellten Halteelementen 110a, 110b und symmetrisch zu den Verriegelungselementen 50, 51 angeordnet. Diese Anordnung ist zur Verdeutlichung nochmals in Figur 9 unter Fortlassung insbesondere des Trägers 10 mit der drehmomentstabilen Führung 132 des Schlittens 106 dargestellt.

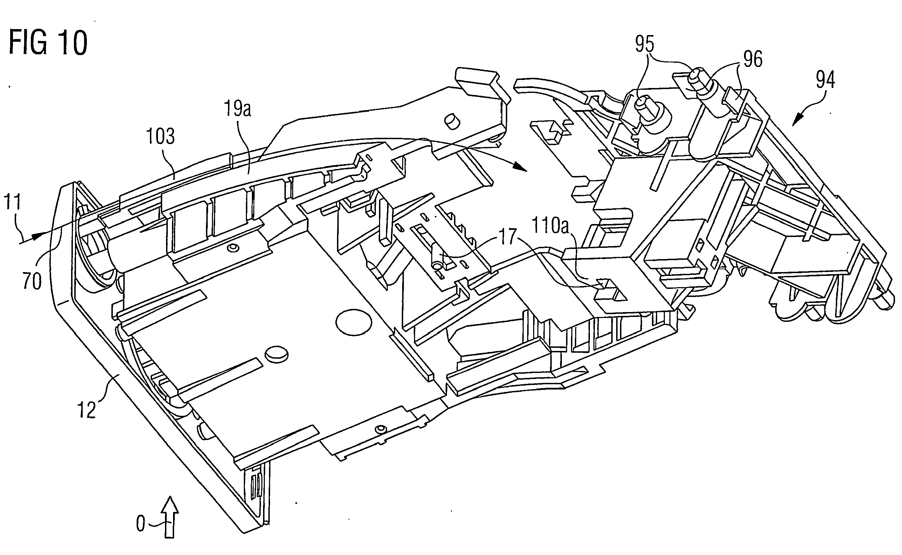

Die perspektivische Darstellung der Figur 10 zeigt die vollständige Medieneinheit in Zusammenschau mit dem Halteelementträger 94 unter Fortlassung der Druckeinheit 4, so dass ein Einfahren der Medieneinheit 26 entlang der Einschubkurve 70 in Einschubrichtung 11 veranschaulicht wird. In der nicht dargestellten Folge verfahren die Verriegelungselemente 50, 51 entlang der Halteelemente 110a, 110b der Verriegelungseinheit, so dass die Medieneinheit 26 unter Vorspannung des zweiten elastischen Elements 108 an dem Halteelementträger 94 und somit in dem Gehäuse in einer Verriegelt-Stellung gehalten wird.

## Patentansprüche

1. Drucker (1) eines Fahrtenschreibers für ein Kraftfahrzeug mit einem Gehäuse (2), einer Druckeinheit (4), mit einer Medieneinheit (26) zur Aufnahme des zu bedruckenden Mediums, welche Medieneinheit (26) relativ zu der Druckeinheit (4) entlang einer eine Einschubrichtung (11) beschreibenden Einschubkurve (70) in eine Betriebsposition und entgegen der Einschubrichtung (11) aus einer Betriebsposition heraus bewegbar ist, welche Medieneinheit (26) zumindest teilweise aus dem Gehäuse (2) heraus bewegbar ist, welche Medieneinheit (26) in dem Gehäuse (2) mittels einer Verriegelungseinheit (17) in einer Betriebsposition verriegelbar ist, welche Verriegelungseinheit (17) mindestens ein bewegbares Verriegelungselement (50) aufweist, welches in eine Verriegelt-Stellung und in eine Entriegelt-Stellung bewegbar ist, wobei das Verriegelungselement (50) in der Verriegelt-Stellung in Eingriff mit mindestens einem Halteelement (110b) steht, welches an dem Gehäuse (2) befestigt ist, **dadurch gekennzeichnet, dass** eine Frontblende (12) der Medieneinheit (26) ein Bedienelement (27) zur Betätigung der Verriegelungseinheit (17) trägt, dass mittels des Bedienelements (27) ein Betätigungsschieber (103) der Verriegelungseinheit (17) betätigt werden kann und dass das Verriegelungselement (50) translatorisch quer zur Einschubrichtung (11) in eine Verriegelt-Stellung und in eine Entriegelt-Stellung bewegbar ist, wobei die Verriegelungseinheit (17) einen gleitgelagerten Schlitten (106) aufweist, welcher das Verriegelungselement (50) trägt und der in eine Verriegelt-Stellung und in eine Entriegelt-Stellung bewegbar ist, wobei der Betätigungsschieber (103) den Schlitten (106) transportiert und wobei das Verriegelungselement (50) an dem Schlitten (106) befestigt ist und sich im Wesentlichen senkrecht zu der Bewegungsrichtung des Schlittens (106) erstreckt.

2. Drucker nach Anspruch 1, **dadurch gekenn-**z e i c h n e t , dass der Drucker zwei voneinander in Abstand zueinander angeordnete Halteelemente aufweist, die in der Verriegelt-Stellung mit mindestens einem Verriegelungselement in Eingriff stehen.

3. Drucker nach mindestens einem der vorhergehenden Ansprüche, **dadurch gekennzeichnet, dass** die Verriegelungseinheit ein erstes elastisches Element aufweist, welches das Verriegelungselement in die Verriegelt-Stellung schiebt oder zieht und vorspannt.

4. Drucker nach mindestens einem der vorhergehenden Ansprüche, **dadurch gekennzeichnet, dass** die an dem Schlitten befestigten Verriegelungselemente mindestens zwei Anlagebereiche aufweisen, mit denen sie an den Haltelementen in der Verriegelt-Stellung anliegen, die Abstandsrichtung der beiden Anlagebereiche eine im Wesentlichen senkrecht zu der Bewegungsrichtung des Schlittens verlaufende Gerade beschreibt.

5. Drucker nach Anspruch 4, **dadurch gekennzeichnet, dass** der Schlitten auf mindestens einer Gleitebene gleitgelagert ist und sich die Gleitebene zwischen den beiden Anlagebereichen erstreckt, so dass auf beiden Seiten der Gleitlagerung des Schlittens mindestens ein Verriegelungselement angeordnet ist.

6. Drucker nach Anspruch 5, **dadurch gekennzeichnet, dass** sich die beiden Anlagebereiche im Wesentlichen auf einer einzigen von einer Normalen der Gleitebene des Schlittens beschriebenen Geraden befinden.

7. Drucker nach Anspruch 4, 5 oder 6, **dadurch gekennzeichnet, dass** die Medieneinheit verschiebbar entlang der Einschubkurve in Führungen gelagert ist, die Abstandsrichtung der beiden Anlagebereiche der Verriegelungseinheit sich im Wesentlichen in Richtung der Normalen der von den Führungen beschriebenen dortigen Tangentialebene erstreckt.

8. Drucker nach mindestens einem der vorhergehenden Ansprüche, **dadurch gekennzeichnet, dass** das Verriegelungselement eine zylindrische Form aufweist und die Zylinderlängsachse senkrecht zu der Bewegungsrichtung verläuft.

9. Drucker nach mindestens einem der vorhergehenden Ansprüche, **dadurch gekennzeichnet, dass** das bewegliche Verriegelungselement (17) an der Medieneinheit (26) befestigter Bestandteil der Medieneinheit (26) ist.

10. Drucker nach mindestens einem der vorhergehenden Ansprüche, **dadurch gekennzeichnet, dass** das stationäre Haltelement mit dem Gehäuse (2) fest verbunden ist und mit den Verriegelungselementen (17) an der Medieneinheit (26) verriegelnd zusammenwirken.

11. Drucker nach mindestens einem der vorhergehenden Ansprüche, **dadurch gekennzeichnet, dass** das Haltelement mindestens eine hakenförmige Kulisse aufweist, entlang derer die Verriegelungselemente bei der Bewegung in die Verriegelt-Stellung verfahren.

12. Drucker nach mindestens einem der vorhergehenden Ansprüche, **dadurch gekennzeichnet, dass** die beweglichen Teile mit einem Sensor zusammenwirken, welcher eine Verriegelt-Stellung, in welcher die Medieneinheit (26) oder der Träger (10) und die Druckeinheit (4) in Abstandsrichtung zueinander fixiert sind, und/oder eine Entriegelt-Stellung, in welcher die Medieneinheit (26) oder der Träger (10) und die Druckeinheit (4) in Abstandsrichtung nicht zueinander fixiert sind, erfasst.

13. Drucker nach mindestens einem der vorhergehenden Ansprüche, **dadurch gekennzeichnet, dass** die Druckeinheit (4) in dem Gehäuse (2) innerhalb eines Bewegungsspiels bewegbar ist, dass Mittel zur Ausrichtung der Druckeinheit (4) zu der Medieneinheit (26) vorgesehen sind, so dass die Druckeinheit (4) und die Medieneinheit (26) zueinander ausrichtet werden, wenn die Medieneinheit (26) in Einschubrichtung (11) eingeschoben wird.

14. Drucker nach mindestens einem der vorhergehenden Ansprüche, **dadurch gekennzeichnet, dass** die Druckeinheit (4) in dem Gehäuse (2) in Einschubrichtung (11) und entgegen der Einschubrichtung (11) und/oder quer zur Einschubrichtung (11)im Ausmaß eines im Wesentlichen horizontalen Bewegungsspiels bewegbar ist.

15. Drucker nach mindestens einem der vorhergehenden Ansprüche, **dadurch gekennzeichnet, dass** die Druckeinheit (4) quer zur Einschubrichtung (11) in dem Gehäuse (2) im Ausmaß eines im Wesentlichen vertikalen Bewegungsspiels bewegbar ist.

16. Drucker nach mindestens einem der vorhergehenden Ansprüche, **dadurch gekennzeichnet, dass** das horizontale Bewegungsspiel in Einschubrichtung (11) und/oder quer zur Einschubrichtung (11) jeweils zwischen 0,5 mm und 1,5 mm beträgt.

17. Drucker nach mindestens einem der vorhergehenden Ansprüche, **dadurch gekennzeichnet, dass** das vertikale Bewegungsspiel quer zur Einschubrichtung (11) zwischen 0,2 mm und 0,5 mm beträgt.

18. Drucker nach mindestens einem der vorhergehenden Ansprüche, **dadurch gekennzeichnet, dass** die Druckeinheit (4) in dem Gehäuse (2) schwimmend gelagert ist.

19. Drucker nach mindestens einem der vorhergehenden Ansprüche, **dadurch gekennzeichnet, dass** der Drucker (1) mindestens ein zweites elastisches Element (13) aufweist, welches die Druckeinheit (4) mit einer Kraft (14) entgegen der Einschubrichtung (11) schiebt oder zieht, so dass die Kraft (14) die Druckeinheit (4) der Medieneinheit (26) entgegen drückt, wenn diese eingeschoben wird.

20. Drucker nach Anspruch 18, **dadurch gekenn-z e i c h n e t ,** dass die Verriegelungseinheit (17) mindestens zwei Halteelemente aufweist, welche symmetrisch zu dem zweiten elastischen Element (13) angeordnet sind.

21. Drucker nach mindestens einem der vorhergehenden Ansprüche, **dadurch gekennzeichnet, dass** das zweite elastische Element (13) so ausgebildet ist, dass es die Druckeinheit (4) in dem Gehäuse (2) bei nicht in Betriebsposition befindlicher Medieneinheit gegen das Bewegungsspiel begrenzende Anschläge vorspannt, so dass sich die Druckeinheit bei Abwesenheit der Medieneinheit stets in einer definierten Position befindet.

22. Drucker nach mindestens einem der vorhergehenden Ansprüche, **dadurch gekennzeichnet, dass** der Drucker mindestens eine Führung aufweist, die mindestens zwei erste Führungselemente (19a, 19b) aufweist, die an der Medieneinheit (26) angeordnet sind, und zwei zweite Führungselemente (20a, 20b) aufweist, die mit den ersten Führungselementen (19) an der Medieneinheit (26) korrespondieren, so dass die Medieneinheit (26) bei einer Bewegung in oder gegen die Einschubrichtung (11) mittels der Führung geführt ist.

23. Fahrtenschreiber mit einem Drucker (1) nach mindestens einem der vorhergehenden Ansprüche.

## Claims

1. Printer (1) of a tachograph for a motor vehicle, having a housing (2), a printing unit (4), having a media unit (26) to hold the medium that can be printed, which media unit (26) can be moved relative to the printing unit (4) along an insertion curve (70) describing an insertion direction (11) into an operating position and, counter to the insertion direction (11), out of an operating position, which media unit (26) can be at least partly removed from the housing (2), which media unit (26) can be locked in an operating position in the housing (2) by means of a locking unit (17), which locking unit (17) has at least one movable locking element (50) which can be moved into a locked position and into an unlocked position, the locking element (50) in the locked position engaging with at least one retaining element (110b) which is fixed to the housing (2), **characterized in that** a front panel (12) of the media unit (26) carries an operating element (27) for actuating the locking unit (17), **in that**, by means of the operating element (27), an operating slide (103) of the locking unit (17) can be actuated, and **in that** the locking element (50) can be moved translationally transversely with respect to the insertion direction (11) into a locked position and into an unlocked position, wherein the locking unit (17) has a slide-mounted carriage (106), which carries the locking element (50) and can be moved into a locked position and into an unlocked position, wherein the operating slide (103) transports the carriage (106) and wherein the locking element (50) is fixed to the carriage (106) and extends substantially perpendicular to the direction of movement of the carriage (106).

2. Printer according to Claim 1, **characterized in that** the printer has two retaining elements arranged with a spacing from each other which, in the locked position, engage with at least one locking element.

3. Printer according to at least one of the preceding claims, **characterized in that** the locking unit has a first resilient element, which pushes or pulls the locking element into the locked position and prestresses it.

4. Printer according to at least one of the preceding claims, **characterized in that** the locking elements fixed to the carriage have at least two contact regions, with which they bear on the retaining elements in the locked position, the direction of the spacing between the two contact regions describes a straight line running substantially perpendicular to the direction of movement of the carriage.

5. Printer according to Claim 4, **characterized in that** the carriage is slide-mounted on at least one sliding plane and the sliding plane extends between the two contact regions, so that at least one locking element is arranged on both sides of the sliding mounting of the carriage.

6. Printer according to Claim 5, **characterized in that** the two contact regions are located substantially on a single straight line described by a normal to the sliding plane of the carriage.

7. Printer according to Claim 4, 5 or 6, **characterized in that** the media unit is mounted such that it can be displaced along the insertion curve in guides, the direction of the spacing between the two contact regions of the locking unit extends substantially in the direction of the normal to the tangential plane described there by the guides.

8. Printer according to at least one of the preceding claims, **characterized in that** the locking unit has a cylindrical shape and the cylinder longitudinal axis runs perpendicular to the direction of movement.

9. Printer according to at least one of the preceding claims, **characterized in that** the movable locking element (17) on the media unit (26) is a fixed component part of the media unit (26).

10. Printer according to at least one of the preceding claims, **characterized in that** the stationary retaining element is permanently connected to the housing (2) and interact in a locking manner with the locking elements (17) on the media unit (26).

11. Printer according to at least one of the preceding claims, **characterized in that** the retaining element has at least one hook-like slotted guide, along which the locking elements move as they move into the locked position.

12. Printer according to at least one of the preceding claims, **characterized in that** the movable parts of the locking unit interact with a sensor which registers a locked position, in which the media unit (26) or the carrier (10) and the printing unit (4) are fixed in relation to each other in the direction of the spacing and/or an unlocked position, in which the media unit (26) or the carrier (10) and the printing unit (4) are not fixed in relation to one another in the direction of the spacing.

13. Printer according to at least one of the preceding claims, **characterized in that** the printing unit (4) can be moved in the housing (2) within a movement play, **in that** means for aligning the printing unit (4) with the media unit (26) are provided, so that the printing unit (4) and the media unit (26) are aligned in relation to each other when the media unit (26) is inserted in the insertion direction (11).

14. Printer according to at least one of the preceding claims, **characterized in that** the printing unit (4) can be moved in the housing (2) in the insertion direction (11) and counter to the insertion direction (11) and/or transversely with respect to the insertion direction (11) to the extent of a substantially horizontal movement play.

15. Printer according to at least one of the preceding claims, **characterized in that** the printing unit (4) can be moved transversely with respect to the insertion direction (11) in the housing (2) to the extent of a substantially vertical movement play.

16. Printer according to at least one of the preceding claims, **characterized in that** the horizontal movement play in the insertion direction (11) and/or transversely with respect to the insertion direction (11) is in each case between 0.5 mm and 1.5 mm.

17. Printer according to at least one of the preceding claims, **characterized in that** the vertical movement play transversely with respect to the insertion direction (11) is between 0.2 mm and 0.5 mm.

18. Printer according to at least one of the preceding claims, **characterized in that** the printing unit (4) is mounted in a floating manner in the housing (2).

19. Printer according to at least one of the preceding claims, **characterized in that** the printer (1) has at least one second resilient element (13), which pushes or pulls the printing unit (4) counter to the insertion direction (11) with a force (14), so that the force (14) urges the printing unit (4) against the media unit (26) when the latter is inserted.

20. Printer according to Claim 18, **characterized in that** the locking unit (17) has at least two retaining elements, which are arranged symmetrically with respect to the second resilient element (13).

21. Printer according to at least one of the preceding claims, **characterized in that** the second resilient element (13) is designed in such a way that it prestresses the printing unit (4) in the housing (2) against stops limiting the movement play when the media unit is not in the operating position, so that the printing unit is always located in a defined position in the absence of the media unit.

22. Printer according to at least one of the preceding claims, **characterized in that** the printer has at least one guide, which has at least two first guide elements (19a, 19b), which are arranged on the media unit (26), and has two second guide elements (20a, 20b), which correspond to the first guide elements (19) on the media unit (26), so that, during a movement in or counter to the insertion direction (11), the media unit (26) is guided by means of the guide.

23. Tachograph having a printer (1) according to at least one of the preceding claims.

## Revendications

1. Imprimante (1) d'un tachygraphe pour un véhicule automobile, comprenant un boîtier (2), une unité (4) d'impression, ayant une unité (26) de supports pour recevoir le support imprimé, laquelle unité (26) de supports peut être déplacée par rapport à l'unité (4) d'impression, le long d'une courbe (70) d'insertion, décrivant un sens (11) d'insertion pour venir dans une position de fonctionnement et, dans le sens contraire au sens (11) d'insertion, pour en sortir, laquelle unité (26) de supports peut être sortie, au moins en partie, du boîtier (2), laquelle unité (26) de supports peut, dans le boîtier (2), être verrouillée en une position de fonctionnement au moyen d'une unité (17) de verrouillage, laquelle unité (17) de verrouillage a au moins un élément (50) de verrouillage mobile, qui peut être mis dans une position verrouillée et dans une position déverrouillée, l'élément (50) de verrouillage étant dans la position verrouillée en prise avec au moins un élément (110b) de maintien fixé au boîtier (2), **caractérisée en ce qu'**un écran (12) avant de l'unité (26) de supports porte un élément (27) de commande pour actionner l'unité (17) de verrouillage, **en ce que**, au moyen de l'élément (27) de commande, un tiroir (103) d'actionnement de l'unité (17) de verrouillage peut être actionné et **en ce que** l'élément (50) de verrouillage peut venir en translation transversalement au sens (11) d'insertion dans une position verrouillée et dans une position déverrouillée, l'unité (17) de verrouillage ayant un chariot (106), qui est monté glissant, qui porte l'élément (50) de verrouillage et qui peut venir dans une position verrouillée et dans une position déverrouillée, le tiroir (103) d'actionnement transportant le chariot (106) et l'élément (50) de verrouillage étant fixé au chariot (106) et s'étendant sensiblement perpendiculairement à la direction de déplacement du chariot (106).

2. Imprimante suivant la revendication 1, **caractérisée en ce que** l'imprimante a deux éléments de maintien, qui sont à distance l'un de l'autre et qui, dans la position verrouillée, sont en prise avec au moins un élément de verrouillage.

3. Imprimante suivant au moins l'une des revendications précédentes, **caractérisée en ce que** l'unité de verrouillage a un premier élément élastique qui pousse ou tire l'élément de verrouillage dans la position verrouillée et le précontraint.

4. Imprimante suivant au moins l'une des revendications précédentes, **caractérisée en ce que** les éléments de verrouillage fixés au chariot ont au moins deux parties d'application, par lesquelles ils s'appliquent aux éléments de maintien en la position verrouillée, la direction en distance des deux parties d'application décrivant une droite s'étendant sensiblement perpendiculairement à la direction de déplacement du chariot.

5. Imprimante suivant la revendication 4, **caractérisée en ce que** le chariot est monté glissant sur au moins un plan de glissement et le plan de glissement s'étend entre les deux parties d'application, de manière à ce qu'au moins un élément de verrouillage soit disposé des deux côtés du montage glissant du chariot.

6. Imprimante suivant la revendication 5, **caractérisée en ce que** les deux parties d'application se trouvent sensiblement sur une droite unique d'une normale au plan de glissement de chariot.

7. Imprimante suivant la revendication 4, 5 ou 6, **caractérisée en ce que** l'unité de support est montée coulissante dans des glissières le long de la courbe d'insertion, la direction en distance des deux parties d'application de l'unité de verrouillage s'étendant sensiblement suivant la normale au plan tangentiel décrit par les glissières.

8. Imprimante suivant au moins l'une des revendications précédentes, **caractérisée en ce que** l'élément de verrouillage a une forme cylindrique et l'axe longitudinal du cylindre est perpendiculaire à la direction de déplacement.

9. Imprimante suivant au moins l'une des revendications précédentes, **caractérisée en ce que** l'élément (17) de verrouillage mobile est un constituant, fixé à l'unité (26) de supports, de l'unité (26) de supports.

10. Imprimante suivant au moins l'une des revendications précédentes, **caractérisée en ce que** l'élément de maintien fixe est relié fixement au boîtier (2) et coopère en verrouillage avec les éléments (17) de verrouillage sur l'unité (26) de supports.

11. Imprimante suivant au moins l'une des revendications précédentes, **caractérisée en ce que** l'élément de maintien a au moins une coulisse en forme de crochet, le long de laquelle les éléments de verrouillage se déplacent lorsqu'ils viennent dans la position verrouillée.

12. Imprimante suivant au moins l'une des revendications précédentes, **caractérisée en ce que** les parties mobiles coopèrent avec une sonde, qui immobilise l'unité (26) de supports ou le support (10) et l'unité (4) d'impression les uns par rapport aux autres dans la direction en distance et/ou détecte une position déverrouillée, dans laquelle l'unité (26) de supports ou le support (10) et l'unité (4) d'impression ne sont pas immobilisées les unes par rapport aux autres dans la direction en distance.

13. Imprimante suivant au moins l'une des revendications précédentes, **caractérisée en ce que** l'unité (4) d'impression est mobile dans le boîtier (2) à l'intérieur d'un jeu de déplacement, **en ce qu'**il est prévu des moyens d'orientation de l'unité (4) d'impression par rapport à l'unité (26) de supports, de manière à orienter l'unité (4) d'impression et l'unité (26) de supports l'une par rapport à l'autre, lorsque l'unité (26) de supports est insérée dans le sens (11) d'insertion.

14. Imprimante suivant au moins l'une des revendications précédentes, **caractérisée en ce que** l'unité (4) d'impression est mobile, dans la mesure d'un jeu de déplacement sensiblement horizontal dans le boîtier (2), dans le sens (11) d'insertion et dans le sens contraire au sens (11) d'insertion et/ou transversalement au sens (11) d'insertion.

15. Imprimante suivant au moins l'une des revendications précédentes, **caractérisée en ce que** l'unité (4) est mobile, dans la mesure d'un jeu de déplacement sensiblement vertical, dans le boîtier (2) transversalement au sens (11) d'insertion.

16. Imprimante suivant au moins l'une des revendications précédentes, **caractérisée en ce que** le jeu de déplacement horizontal dans le sens (11) d'insertion et/ou transversalement au sens (11) d'insertion est respectivement compris entre 0,5 mm et 1,5 mm.

17. Imprimante suivant au moins l'une des revendications précédentes, **caractérisée en ce que** le jeu vertical de déplacement transversalement au sens (11) d'insertion est compris entre 0,2 mm et 0,5 mm.

18. Imprimante suivant au moins l'une des revendications précédentes, **caractérisée en ce que** l'unité (4) d'impression est montée flottante dans le boîtier (2).

19. Imprimante suivant au moins l'une des revendications précédentes, **caractérisée en ce que** l'imprimante (1) a au moins un deuxième élément (13) élastique, qui pousse ou qui tire l'unité (4) d'impression avec une force (14) dans le sens contraire au sens (11) d'insertion, de sorte que la force (14) pousse l'unité (4) d'impression contre l'unité (26) de supports, lorsque celle-ci est insérée.

20. Imprimante suivant la revendication 18, **caractérisée en ce que** l'unité (17) de verrouillage a au moins deux éléments de maintien, qui sont disposés symétriquement par rapport au deuxième élément (13) élastique.

21. Imprimante suivant au moins l'une des revendications précédentes, **caractérisée en ce que** le deuxième élément (13) élastique est constitué de manière à précontraindre l'unité (4) d'impression dans le boîtier (2), lorsque l'unité de supports ne se trouve pas en position de fonctionnement, contre des butées limitant le jeu de déplacement, de sorte que l'unité d'impression se trouve, en l'absence de l'unité de supports, toujours en une position définie.

22. Imprimante suivant au moins l'une des revendications précédentes, **caractérisée en ce que** l'imprimante a au moins un guidage, qui a au moins deux premiers éléments (19a, 19b) de guidage disposés sur l'unité (26) de supports, et deux deuxièmes éléments (20a, 20b) de guidage, qui correspondent aux premiers éléments (19) de guidage sur l'unité (26) de supports, de manière à ce que l'unité (26) de supports soit guidée au moyen du guidage lors d'un déplacement dans le sens (11) d'insertion ou dans le sens contraire au sens d'insertion.

23. Tachygraphe ayant une imprimante (1) suivant au moins l'une des revendications précédentes.
